# EUROPÄISCHE PATENTSCHRIFT

(11) **EP 3 068 592 B1**
(45) Veröffentlichungstag und Bekanntmachung des Hinweises auf die Patenterteilung: **21.10.2020**
(21) Anmeldenummer: 14827158.8
(22) Anmeldetag: 15.11.2014
(51) Int. Cl.: B25J 15/02, B25J 19/00

(54) **GREIFVORRICHTUNG MIT FÜHRUNGSNUTDICHTUNG**
GRIPPING DEVICE WITH GUIDING GROOVE SEAL
DISPOSITIF DE PRÉHENSION COMPRENANT UNE ÉTANCHÉITÉ DE RAINURE DE GUIDAGE

(30) Priorität: 15.11.2013 DE 102013019035
(43) Veröffentlichungstag der Anmeldung: 21.09.2016
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2014/000586
(87) Internationale Veröffentlichungsnummer: WO 2015/070839

(56) Entgegenhaltungen:
- DE-A1-102006 057 496
- DE-A1-102007 034 630
- DE-C1- 10 146 196
- US-A- 5 967 581
- "GRIPPERS HAVE A CLEAN GRASP", MACHINE DESIGN, PENTON MEDIA, CLEVELAND, OH, US, Bd. 69, Nr. 6, 20. März 1997 (1997-03-20), Seite 38, XP000726285, ISSN: 0024-9114

## Beschreibung

Die Erfindung betrifft eine Greifvorrichtung mit bewegliche Greifelemente tragenden Schlitten, wobei die Schlitten in Greifrichtung der Greifelemente hintereinander in einer gemeinsam genutzten, in einem Grundkörper angeordneten, zu den Greifelementen hin zumindest bereichsweise offenen Führungsnut parallel zur Greifrichtung - zwischen einer Öffnungs- und Schließstellung - antreibbar geführt und quer zur Greifrichtung allseitig abstützend gelagert sind.

Die DE 10 2006 057 496 A1 beschreibt einen pneumatischen Parallelgreifer, der zwei Greifelemente tragende Schlitten in einer Führung seines Grundkörpers hintereinander lagert. Der zwischen den Schlitten gelegene Bereich, der beim Auseinanderfahren der Schlitten einen Freiraum bildet, ist durch eine Schutzplatte abgedeckt.

Aus der DE 10 2007 034 630 A1 ist eine Spindelschutzvorrichtung für eine Spannvorrichtung bekannt. Die Spannvorrichtung ist als verstellbarer Spannbacken ein Teil eines in der Regel rotierenden Mehrbackenspannfutters einer Drehmaschine. Der in der Spannvorrichtung in einer T-Nut sitzende Spannbacken hat an seinen beiden - normal zur Verstellrichtung ausgerichteten - Stirnseiten jeweils eine abstreifende Reinigungseinrichtung. Letztere besteht aus einer Reinigungsplatte und einer Abdeckplatte. Die Reinigungsplatte steht über die Abdeckplatte über und liegt an der Kontur der T-Nut an.

Aus dem SOMMER automatic-Katalog "Greifer, pneumatisch", Seite 132 - 134 vom Juni 2004 sind Parallelgreifvorrichtungen bekannt, deren Gehäuseinnenraum gegenüber der Umgebung mit Dichtringen abgedichtet sind. Dazu werden die die Greifelemente tragenden Schlitten als zylindrische Zapfen seitlich aus dem Greifergehäuse herausgeführt. In den seitlichen Gehäuseöffnungen sind in den entsprechenden Nuten die an dem jeweiligen Schlitten dichtend anliegenden Dichtringe eingesetzt.

Der vorliegenden Erfindung liegt die Problemstellung zugrunde, eine Parallelgreifvorrichtung zu entwickeln, die bei großer Klemmkraft, geringem Bauraumbedarf und geringer Eigenmasse eine lange Lebensdauer hat. Dabei soll der Innenraum der Vorrichtung gegenüber der Umgebung abgedichtet sein.

Diese Problemstellung wird mit den Merkmalen des Hauptanspruchs gelöst. Dazu weist die Führungsnut im mittleren Bereich eine Gehäuseabdeckung auf, deren in Greifrichtung gemessene Länge mindestens dem maximalen Greifhub der Greifelemente entspricht. Jeder Schlitten lagert einen Dichtungskörper direkt oder indirekt über einen Dichtungsträger. Der Dichtungskörper liegt an den seitlichen Führungsnutwandungen und dem Grund der Führungsnut dichtend und zumindest bereichsweise Schmutz abstreifend an. Jeder Dichtungskörper weist im Bereich der Gehäuseabdeckung eine an dieser anliegende Dichtlippe auf.

Die hier beschriebene Greifvorrichtung hat Greifer, die aus dem vorrichtungseigenen Grundkörper oder Gehäuse über große Gehäuseöffnungen herausragen. Da zudem jede Gehäuseöffnung pro Greifer sich über mindestens zwei zueinander abgewinkelte Gehäusewandungen erstreckt, ist jeweils ein Dichtungskörper erforderlich, der zumindest bereichsweise auch die Funktion eines Abstreifers aufweist.

Um den Dichtungskörper der Führungsnutdichtung in die entsprechende Gehäuseöffnung einpassen zu können, benötigt er einen Träger. Ein solcher Träger kann der die Greifarme tragende Schlitten oder ein spezieller, z.B. separat montierbarer Dichtungsträger sein. In beiden Fällen ist der elastische Dichtungskörper an den Träger z.B. durch Anspritzen, durch Aufvulkanisieren, durch Aufkleben, durch Überstülpen, durch Aufstülpen, durch Anköpfen oder dergleichen so zu befestigen, dass er bei den üblichen Schlittenbewegungen das Gehäuse sicher dichten kann. Da der Dichtungskörper zusammen mit dem jeweiligen Schlitten verfährt, sind die in der Schlittenführungsnut angeordneten Führungsschienen zumindest bereichsweise in der Geschlossenstellung zu sehen.

Die Führungsnutdichtung ist hier am Beispiel eines Parallelgreifers dargestellt. Selbstverständlich ist der Aufbau der Führungsnut und die passende Dichtung auch für Mehrfingergreifer verwendbar.

Weitere Einzelheiten der Erfindung ergeben sich aus den Unteransprüchen und der nachfolgenden Beschreibung schematisch dargestellter Ausführungsformen.
- Figur 1:: Perspektivische Ansicht eines Parallelgreifers;
- Figur 2:: Längsschnitt durch den Parallelgreifer nach Figur 1, jedoch mit Greifbacken. Der rechte Greifbacken ist geöffnet;
- Figur 3:: Perspektivische Ansicht des Grundkörpers des Parallelgreifers nach Figur 1;
- Figur 4:: Perspektivische Ansicht des unteren Deckels mit aufgelegter Flachdichtung;
- Figur 5:: Perspektivische Ansicht des Kolbens ohne Kolbendichtung von unten;
- Figur 6:: Querschnitt mittig durch den Parallelgreifer;
- Figur 7:: Querschnitt durch den Parallelgreifer im Bereich der vertikalen Befestigungsbohrungen;
- Figur 8:: Perspektivische Ansicht der Schlitten, der Führungsabdichtungen und des Doppelkeils von oben;
- Figur 9:: Perspektivische Ansicht der Schlitten, der Führungsabdichtungen und des Doppelkeils von unten;
- Figur 10:: Perspektivische Ansicht einer Führungsnutdichtung von außen;
- Figur 11:: wie Figur 10, jedoch und innen;
- Figur 12:: Seitenansicht der Führungsnutdichtung;
- Figur 13:: Querschnitt durch die Führungsnutdichtung im Bereich der Positionierausnehmung;
- Figur 14:: Draufsicht auf die Führungsnutdichtung;
- Figur 15:: Frontansicht der Führungsnutdichtung;
- Figur 16:: vergrößerter Teilschnitt durch den Grundkörper, vgl. auch Figur 7;
- Figur 17:: vergrößertes Detail zu Figur 13;
- Figur 18:: vergrößertes Detail zu Figur 12;
- Figur 19:: vergrößertes Detail zu Figur 2.

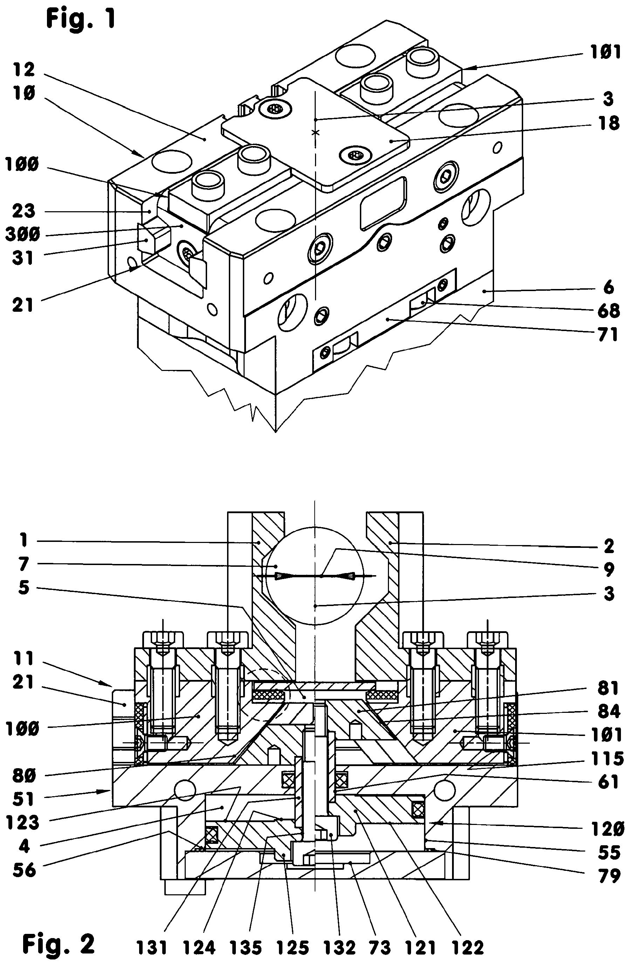

Die Figur 1 zeigt eine Parallelgreifvorrichtung mit zwei jeweils auf Schlitten (100, 101) sitzenden Greifbacken (1, 2). Die in ihrer Längsrichtung beweglichen Schlitten (100, 101) sind in einem Gehäuse bzw. Grundkörper (10) in einer Führungsnut (21) z.B. gleitgelagert geführt. Das die Führungsnut aufnehmende Gehäuse (10) umgibt ferner eine z.B. doppeltwirkende Zylinder-Kolben-Einheit (120). Die Zylinder-Kolben-Einheit wirkt über ein Doppelschiebekeilgetriebe (80) auf die Schlitten (100, 101). In Figur 1 ist die Parallelgreifvorrichtung über ihren Grundkörper (10) auf einem sie tragenden Maschinen- bzw. Handhabungsgeräteteil (6) montiert.

Die Figur 2 stellt die Parallelgreifvorrichtung im Längsschnitt mit zwei aufgeschraubten Greifbacken (1, 2) dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur Darstellung nach Figur 2 bewegen sich die Greifbacken (1, 2) getriebebedingt immer zwangsläufig synchron aufeinander zu oder voneinander weg.

Der z.B. im Wesentlichen quaderförmige Grundkörper (10) der Parallelgreifvorrichtung besteht aus einem oberen Führungsabschnitt (11) und einem unteren Antriebsabschnitt (51). Er ist beispielsweise aus der Aluminiumlegierung AlMgSil gefertigt. Die Länge des Grundkörpers (10) ist z.B. fast doppelt so lang wie seine Breite und die Grundkörperhöhe. Im Ausführungsbeispiel ist der Grundkörper (10) 50 mm lang. Bei dieser Baugröße beträgt der maximale Hub jedes Schlittens (100, 101) bzw. Greiferbackens (1, 2) z.B. 2,625 mm.

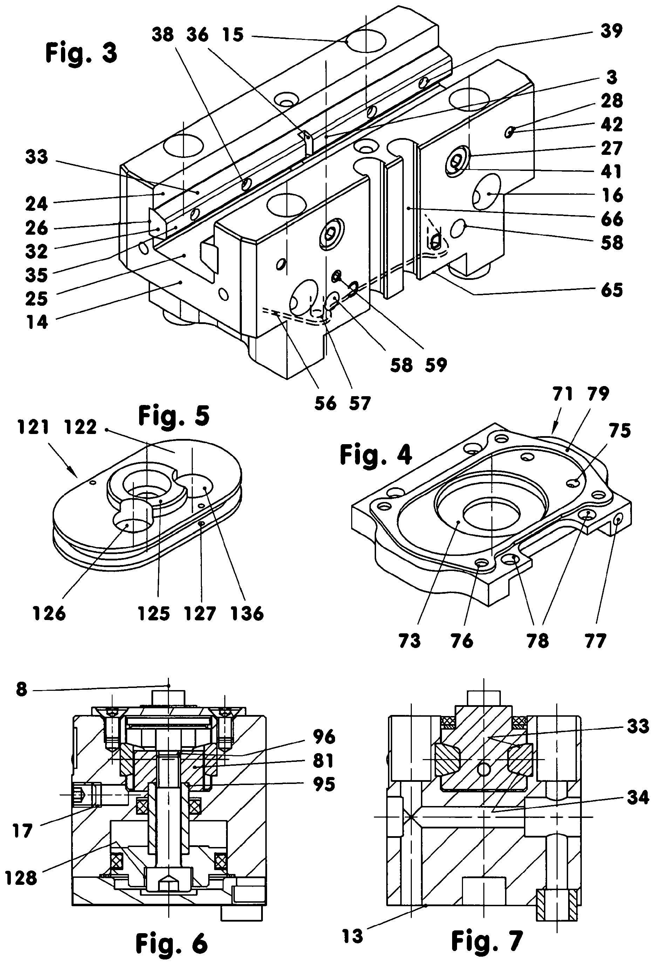

Der Führungsabschnitt (11) nimmt zentral die nach oben - zu den Greifelementen (1, 2) hin - offene Führungsnut (21) auf, vgl. Figur 3, deren z.B. rechteckiger Querschnitt eine Breite von 10,7 mm und Höhe von 9,3 mm misst. In den planen Seitenwandungen (23, 24) der Führungsnut (21) ist jeweils eine flache, z.B. 0,65 mm Tiefe und 4 mm breite Schienenführungsnut (26) zur späteren Aufnahme einer Führungsschiene (31, 32) eingearbeitet. Die einzelne Schienenführungsnut (26) hat einen rechteckigen Querschnitt, einen planen Grund und z.B. plane Seitenwandungen. Die Schienenführungsnuten (26) erstrecken sich über die gesamte Länge des Grundkörpers (10).

Jede Führungsschiene (31, 32) ist eine aus einem nichtrostenden Stahl, z.B. aus einem X90CrMoV18, gefertigte, im Wesentlichen trapezförmige Stange. Die Breite der sich z.B. über die Länge des Grundkörpers (10) erstreckende Führungsschiene (31, 32) beträgt im Ausführungsbeispiel 4 mm. Die Höhe der Führungsschiene (31, 32) misst 75% ihrer Breite. Jede Führungsschiene (31, 32) hat einen sechseckigen Querschnitt und weist zwei einander spiegelsymmetrisch gegenüberliegende Tragflanken (33, 34) auf, die einen Winkel von 30 Winkelgraden einschließen. Die Spiegelebene halbiert die Führungsschiene (31, 32) entlang ihrer horizontalen Längsmittenebene. Die Tragflanken (33, 34) überdecken mindestens 75 % der Führungsschienenhöhe, wobei die Führungsschienenhöhe parallel zu den Mittellinien der die Führungsschiene (31, 32) positionierenden Passstifte (42) gemessen wird. Zwischen den Tragflanken (33, 34) und der dazwischen eingeschlossenen, zur vertikalen Mittenlängsebene (8) parallelen freien Fläche (35) befinden sich Kantenabrundungen, deren Radien jeweils 0,5 mm messen.

Mindestens eine der Führungsschiene (31, 32) weist mittig eine Quernut (36) mit der Breite von z.B. 1,2 mm und der Tiefe von z.B. 1,4 mm auf. Diese Quernut (36) dient der zusätzlichen verschleißfesten Führung des im Doppelschiebekeilgetriebe (80) verwendeten Doppelschiebekeils (81).

Im Ausführungsbeispiel sind die Führungsschienen (31, 32) jeweils mit zwei Senkschrauben (41) am Grundkörper (10) befestigt, vgl. Figur 1 und 3. Vorab werden die Führungsschienen (31, 32) jeweils mit Hilfe von zwei Passstiften (42) am Grundkörper (10) positioniert. Die Passstifte sind jeweils im Bereich zwischen den Verschraubungen und der nächstgelegenen Grundkörperstirnseite (14) angeordnet. Die Bohrungen (39) für die Passstifte (42) und die Gewindebohrungen (38) liegen jeweils auf der horizontalen Mittenlängsebene der Führungsschienen (31, 32).

Um ein maximales Führungsspiel von weniger als 0,05 mm zwischen den Führungsschienen (31, 32) und den Schlitten (100, 101) zu erzielen, können die Führungschienen nach dem Einbau in den Grundkörper (10) durch Hartmetallfräsen oder Überschleifen feinbearbeitet werden.

Der unterhalb des Führungsabschnittes (11) gelegene Antriebsabschnitt (31) nimmt im Wesentlichen die Zylinder-Kolben-Einheit (120) und die betätigungsmittelführenden Kanäle und Durchbrüche auf. In den seitlichen Bereichen unterhalb des Führungsabschnittes (11) ist der Grundkörper (10) beidseitig um circa 12 % der Gesamtgrundkörperlänge auf einer Höhe von 38,3 % der Grundkörpergesamthöhe verkürzt ausgebildet.

Die Unterseite (13) des Grundkörpers (10) hat eine z.B. 3,5 mm tiefe, hier 12-eckige Deckelausnehmung (65). Die Deckelausnehmung erstreckt sich von der vorderen bis zur hinteren Längsseitenwandung des Grundkörpers (10). Von der Deckelausnehmung (65) aus ragt eine z.B. 7 mm tiefe Zylinderausnehmung (55) in den Grundkörper (10) in Richtung der Führungsnut (21) hinein, vgl. Figur 2. Die Zylinderausnehmung (55) hat hier einen ovalen Querschnitt, dessen Länge z.B. 54 % der Grundkörpergesamtlänge entspricht. Die Breite der Zylinderausnehmung (55) misst z.B. 53,7 % ihrer Länge. Die beiden Radien des ovalen Querschnitts entsprechen der halben Breite der Zylinderausnehmung (55). Um die Zylinderausnehmung (55) herum befindet sich eine umlaufende Dichtsitzvertiefung (56) mit planem Grund. Die darin anzuordnende Flachdichtung (79) ist in Figur 4 auf dem Deckel (71) liegend dargestellt.

Im Bereich der Dichtsitzvertiefung (56) sind vier Bodenbohrungen (57) angeordnet, von denen je zwei eine Druckluftbohrung (58) schneiden. Letztere sind zwei senkrecht zu den langen Grundkörperseitenwandungen angeordnete Bohrungen. Nach Figur 3 ist die eine mit einem "O" für "Open" und die andere mit einem "C" für "Close" bezeichnet. Die Bodenbohrung (57), die die mit "C" bezeichnete Druckluftbohrung (58) schneidet, schneidet eine weitere über der Druckluftbohrung (58) gelegene Querbohrung (59). Letztere ist mit einem Gewindestift dicht verschlossen. Über diese Querbohrung (59) kann die Zylinderausnehmung (55) in ihrer Bodennähe mit Druckluft versorgt werden.

Im Zentrum des Bodens der Zylinderausnehmung (55) befindet sich eine Durchgangsbohrung (61), die die Zylinderausnehmung (55) mit der Führungsnut (21) verbindet. Mittig weist die Durchgangsbohrung (61) einen Einstich zur Aufnahme eines Kolbenstangendichtringes auf.

Zur Befestigung des Grundkörpers (10) an einem Maschinenschlitten (6) verfügt dieser über vier vertikale Bohrungen (15) und zwei Querdurchgangsbohrungen (16). In Figur 1 werden speziell die vertikale Bohrungen (15) zur Befestigung benutzt. Bis auf zwei einander diagonal gegenüberliegenden Bohrungen sind alle anderen Befestigungsbohrungen (15, 16) mit den zu den jeweiligen Befestigungsschrauben passenden Senkungen ausgestattet.

Der Grundkörper (10) weist auf der in Figur 3 dargestellten großen Seitenwandung im mittleren Bereich zwei auch zu dieser Seitenwandung hin offene Sensorausnehmungen (66) auf. Ihre Mittellinien sind parallel zur Mittellinie (3) der Vorrichtung orientiert. Ihre großteils u-förmigen Querschnitte werden im Bereich der Seitenwandung durch beidseits - als Fixierschutz für einsetzbare Kolbenpositionssensoren - vorspringende Hintergriffe verengt.

Der Deckel (71), der mit geringem Spiel in die 12-eckige Deckelausnehmung (65) passt, vgl. Figur 4, hat zentral eine zweistufige Vertiefung (73), in die der Kolben (121) des pneumatischen Antriebs (80) in der Greiferschließstellung partiell hineinragen kann. Um die Vertiefung (73) sind vier Befestigungsbohrungen (78) angeordnet, über die der Deckel (71) mit dem Grundkörper (10), unter Zwischenlage der Flachdichtung (79), dicht mit vier Zylinderschrauben (68), vgl. Figur 1, verschraubt wird. Zur Aufnahme der Schraubenköpfe der Zylinderschrauben (68) weist der Deckel (71) Senkungen oder Einfräsungen auf, die in den Bereich der Längsseitenwandungen reichen, vgl. Figuren 1 und 3.

Speziell im Bereich der hinteren, gewölbten Seitenwandung des Deckels (71) hat dieser z.B. vier zum Grundkörper (10) hin orientierte Sacklochbohrungen (76), von denen zwei sich in der elastischen Flachdichtung (79) fortsetzen, vgl. Figur 4. Je zwei Sacklochbohrungen (75) münden in eine lange durchgehende Querbohrung (77), die an den Längsseitenwandungen des Deckels (71) mit Gewindestiften verschlossen ist. Die nach Figur 4 innerhalb der Umrandung der Flachdichtung (79) gelegenen Sacklochbohrungen (75) dienen, während des Greiferlösevorganges, als Auslassbohrungen für die Druckluft. Diese Druckluft wird über die mit "O" gekennzeichnete Bohrung (58) in den Grundkörper (10) gepresst, um von dort über die vertikale Bodenbohrung (57) durch die Flachdichtung (79) hindurch in die Querbohrung (77) zu gelangen.

In dem von der Zylinderausnehmung (55) und dem Deckel (71) umgebenen Zylinderinnenraum (4) ist ein ovaler Kolben (121) mit seiner zweiteiligen Kolbenstange (131, 132) angeordnet. Der Kolben (121), dessen mittlere Wandstärke im Ausführungsbeispiel weniger als ein Sechstel der Grundkörperhöhe beträgt, hat zentral eine dreistufige Durchgangsbohrung (135), wobei die mittlere Stufe den kleinsten Durchmesser von z.B. 3,2 mm aufweist.

Die kolbenstangenseitige Bohrungsstufe hat zur Aufnahme einer Kolbenstangenhülse (131) einen Durchmesser von 5 mm. Um die Durchgangsbohrung (135) herum hat der Kolben (121) dort einen 0,2 mm hohen scheibenförmigen Vorsprung (124), der als oberer Anschlag des Kolbens (121) dient. Sein zylindrischer Rand kann auch der Innenführung einer Schraubendruckfeder dienen.

Der ovale Kolben (121) besitzt zur Abdichtung gegenüber der Zylinderausnehmungswandung des Grundkörpers (10) einen umlaufenden, in einer Dichtnut gelagerten Quaddichtring. Im Bereich der Dichtnut weist der Kolben (121) mindestens eine Druckausgleichsbohrung (127) auf, deren Mittellinie z.B. parallel zur Mittellinie (3) verläuft und die den Kolben (121) im Bereich der Dichtnut schneidet. Über die mindestens eine Druckausgleichsbohrung (127), deren Durchmesser z.B. 0,7 mm beträgt, gelangt während der Druckluftzufuhr die Druckluft vor den Quaddichtring, um diesen sicher und schnell an der dem Überdruck abgewandten Nutflanke der Dichtnut anzulegen.

Die Kolbenbodenseite (122), vgl. Figur 5, weist ebenfalls einen Vorsprung (125) auf, in dessen zentraler Senkung (128) der Kopf der Kolbenstangenschraube (132) sitzt. Der Kolben (121) hat im vorderen Bereich des Vorsprungs (125) zwei Sacklochbohrungen (126). In diese Sacklochbohrungen werden bei Bedarf Scheibenmagnete (136) für die Kolbenpositionsüberwachung eingeklebt.

Die Kolbenstange (131, 132) besteht hier aus der Kolbenstangenschraube (132), z.B. eine Senkkopfschraube, und einer auf ihr aufgesteckten Kolbenstangenhülse (131). Diese beiden Teile bilden zusammen mit dem Kolben (121) und Doppelschiebekeil (81) des Doppelschiebekeilgetriebes (80) eine formsteife Baugruppe, sobald die Kolbenstangenschraube (132) mittig in eine Senkbohrung (95) des Doppelschiebekeils (81) eingesteckt und in der an die Senkbohrung anschließende Gewindebohrung (96) festgeschraubt wird.

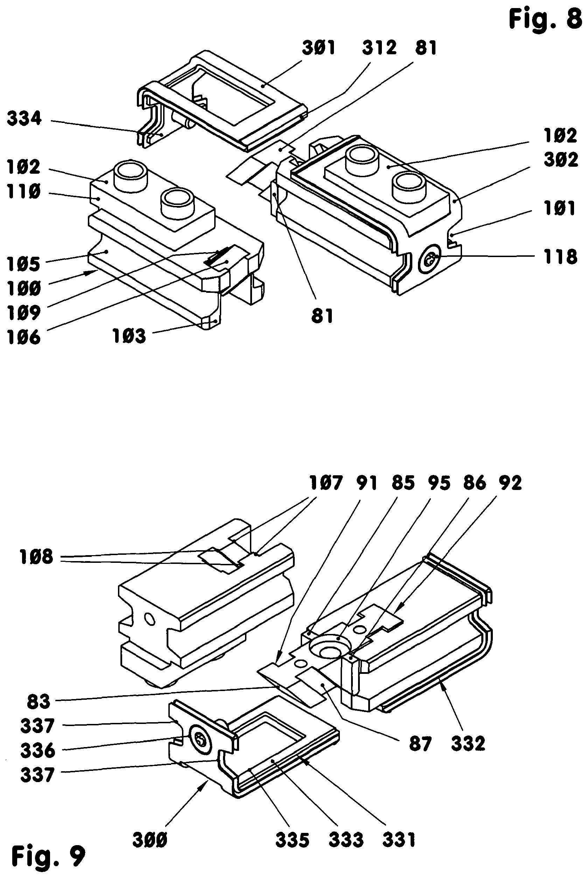

Der Doppelschiebekeil (81), der in der Führungsnut (21) als Teil eines Doppelschiebekeilgetriebes (80) angeordnet ist, ist im Wesentlichen ein vierkantstabartiges Bauteil mit quadratischem Querschnitt. In seinem mittleren Bereich ist beidseitig jeweils ein seitlich senkrecht abstehender Stützsteg (85, 86) angeformt, vgl. Figuren 8 und 9. Der Stützsteg (85, 86), der sich parallel zur Mittellinie (3) über die gesamte Doppelschiebekeilhöhe erstreckt, ist 1,2 mm breit. Er steht 1,8 mm über seine Quadergrundform über.

Der Doppelschiebekeil (81) weist an seinen stirnseitigen Enden jeweils eine im Schiebekeilwinkel abgeschrägte Stirnfläche (83, 84) auf. Der Schiebekeilwinkel liegt z.B. zwischen 20 und 50 Winkelgraden gegenüber der Greifrichtung (9). Im Ausführungsbeispiel beträgt er 50 Winkelgrade.

Parallel zu den abgeschrägten Stirnseiten (83, 84) befinden sich jeweils zwischen einer Stirnseite (83, 84) und einem Stützsteg (85, 86), pro Längsseite des Doppelschiebekeils (81), eine Keilnut (87). Die jeweilige Keilnut (87) ist parallel zu der nächstgelegenen Stirnseite (83, 84) orientiert. Sie hat dabei einen rechteckigen Querschnitt. Der Doppelschiebekeil (81) hat somit pro Längsseite zwei Keilnuten (87). Da er zur vertikalen Mittenlängsebene (8) symmetrisch aufgebaut ist, liegt jeder Keilnut (87) einer Längsseite eine zweite gegenüber. Auf diese Weise bildet jeder stirnseitige Bereich des Doppelschiebekeils (81) einen - im Querschnitt betrachtet - schräg angeordneten T-förmigen Keilsteg (91, 92).

Jeder Keilsteg (91, 92) des Doppelschiebekeils (81) greift formschlüssig in einen in der Führungsnut (21) gelagerten Schlitten (100, 101) ein. Jeder Schlitten ist primär ein quaderförmiger Körper, in den beidseitig Schlittenführungsnuten (105) eingearbeitet sind, mit der der einzelne Schlitten (100, 101) auf den Führungsschienen (31, 32) gleitgelagert ist.

Der einzelne Schlitten (100, 101), dessen Breite z.B. 0,2 mm kleiner ist als die Breite der Führungsnut (21), hat in der dem Doppelschiebekeil (81) zugewandten Stirnfläche (103) eine schräg angeordnete T-Nut (106), mit der der Schlitten (100, 101) den Keilsteg (91, 92) des Doppelschiebekeils (81) mit einem unter 0,1 mm liegenden Spiel umgreift. Nach den Figuren 8 und 9 sind in den Grund der T-Nut (106) mit Schmiermittel befüllbare Schmiertaschen (109) eingearbeitet. Auf der dem Doppelschiebekeil (81) abgewandten Stirnfläche weist der einzelne Schlitten (100, 101) eine Gewindebohrung (115) auf, deren Mittellinie auf der Mittenlängsebene (8) liegt. Über diese Gewindebohrung (115) kann die Führungsnutdichtung (300) befestigt werden.

Auf der Oberseite jedes Schlittens (100, 101) befindet sich ein z.B. quaderförmiger, z.B. 2,8 mm hoher Adapteraufsatz (110), der bei montiertem Schlitten (100, 101) oben um z.B. 1,2 mm - über die Gehäuseoberseite (12) überstehend - aus der Führungsnut (21) herausragt. Zugleich steht der Adapteraufsatz (110) über die jeweils außenliegende, der T-Nut (106) abgewandte Stirnseite um z.B. 1,5 mm über. Die ebene Oberseite (102) des Adapteraufsatzes (110) hat zwei mit Zylindersenkungen ausgestattete Gewindebohrungen, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten (100, 101). Ggf. sind dort die Greifbacken (1, 2) auch direkt angeformt oder unlösbar fixiert.

Die Schlitten (100, 101) sind in der Führungsnut (21), vgl. Figur 2, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (21) ist mit einer z.B. rechteckigen Abdeckplatte (18) verschlossen. Die Abdeckplatte (18) ist so breit ausgelegt, dass die beiden Schlitten (100, 101), in Schließstellung der Greiferbacken (1, 2), diese gerade noch nicht berühren.

Um das Gehäuseinnere (5) und die Führungsschienen (31, 32) vor Schmutz oder sonstigen verschleißfördernden Verunreinigungen zu schützen, werden nach den Figuren 8 und 9 auf den Schlitten (100, 101) winkelförmige Führungsnutdichtungen (300) aufgesetzt und festgeschraubt.

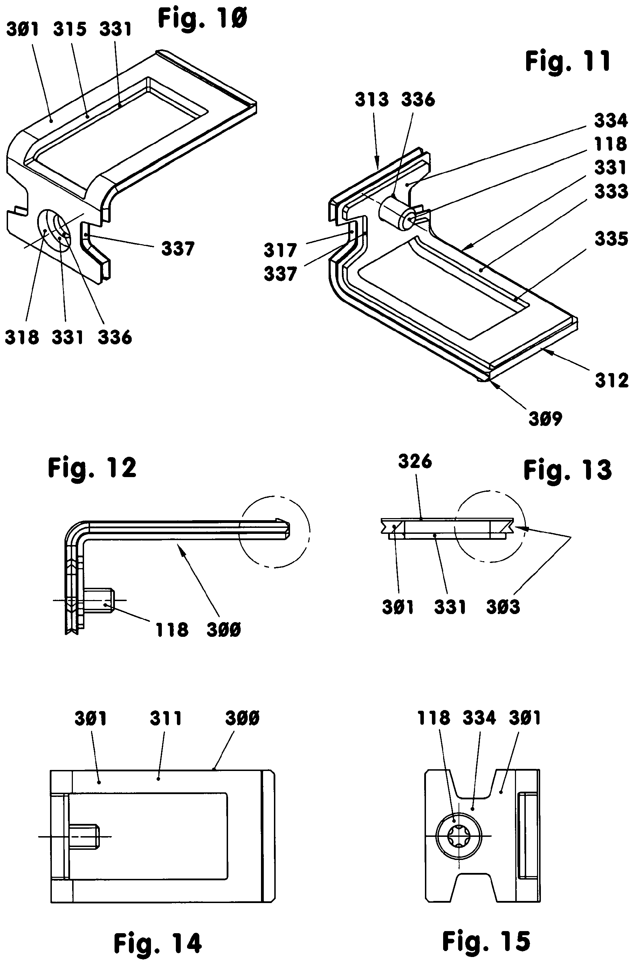

Die Führungsnutdichtung (300), vgl. auch die Figuren 10 - 19, besteht im Wesentlichen aus zwei Teilen pro Schlitten (100, 101): dem Dichtungsträger (331, 332) und dem Dichtungskörper (301, 302). Der Dichtungsträger (331, 332) ist ein aus 15CrMo17-1 gestanzter Blechwinkel, der einen langen Schenkel (333) und einen kurzen Schenkel (334) hat. Beide Schenkel (333, 334) haben z.B. eine Breite von 9,7 mm bei einer Blechstärke von 0,5 mm. Somit ist der Blechwinkel (331, 332) 0,5 mm schmäler als die Nutbreite der abzudichtenden Führungsnut (21). Die Schenkel (333, 334) schließen einen Winkel von 90 Winkelgraden ein. Der mittlere Knickradius an der Stoßstelle der Schenkel beträgt z.B. 0,75 mm. Der lange Schenkel (333) hat eine Länge von 17,5 mm, während die Länge des kurzen Schenkels (334) 7,8 mm beträgt.

Der lange Schenkel (333) hat eine rechteckige Positionierausnehmung (335), mit der er im montierten Zustand die Greifbackenmontagebasis, den Adapteraufsatz (110), des jeweiligen Schlittens (100, 101) - zumindest bereichsweise - mit geringem Spiel von 0,1 mm oder weniger umgibt. Die Flanken der Positionierausnehmung (335) sind senkrecht zur Längs- und Querausdehnung des Schenkels (333) orientiert. Die Positionierausnehmung (335) hat bei einer Breite von 7,1 mm eine Länge von 13,1 mm.

Der kurze Schenkel (334) besitzt ca. mittig eine Montagebohrung (336) und seitlich jeweils eine Nut (337). Da die Führungsnutdichtung (300) spiegelsymmetrisch zu der Mittenlängsebene (8) der Greifvorrichtung angeordnet ist, sitzen sich auch die Nuten (337) des kurzen Schenkels (334) gegenüber. Der Abstand der Nutgrundflächen der einander gegenüberliegenden Nuten (337) ist um 0,2 mm größer als der kürzeste Abstand der beiden Führungsschienen (31, 32) der Greifvorrichtung. Die Kontur der einzelnen Nut (337) entspricht mit einem Spielaufschlag von 0,1 mm der Kontur des Querschnitts der korrespondierenden Führungsschiene (31, 32).

Ggf. kann der Dichtungsträger auch aus Kunststoff, z.B. aus einem Acrylnitril-Butadien-Styrol-Copolymerisat gefertigt werden.

Der Dichtungskörper (301, 302) ist ein elastischer Körper, der die Führungsnut (21) bzw. den Gehäuseinnenraum (5) entlang der Grundkörperoberseite (12) und entlang der Grundkörperstirnseite (14) gegenüber der Umgebung abdichtet. Der Dichtungskörper (301, 302) wird beispielsweise für Greifvorrichtungen, die in einem Umgebungstemperaturbereich von -10 bis +80°C verwendet werden, aus einem Nitrilkautschuk (NBR) gefertigt, dessen Shore-A-Härte bei 70 liegt. Für einen Temperaturbereich, dessen Obergrenze 30°C höher liegt, kann ein Fluorkautschuk (FKM) eingesetzt werden, dessen Shore-A-Härte z.B. 80 misst.

Bei der Variante gemäß den Ausführungsbeispielen wird der Elastomerkörper z.B. in einer Spritzgießform auf den Dichtungsträger (331, 332) aufgespritzt und anvulkanisiert. Letzterer wird zuvor durch Aufbringen eines Harzes und/oder Primers vorbehandelt. Auf das Harz und/oder den Primer wird beispielsweise zudem ein Bindemittel aufgetragen, auf dem der synthetische Gummi letztendlich haftet.

Der abgewickelte, dann ebene Elastomerkörper ist im Wesentlichen ein plattenförmiges Bauteil, das mit drei Seitenflächen senkrecht gegen die Führungsnutwandung (23 - 25) gepresst wird. Nach Figur 1 liegen die langen Seitenwandungen an den Nutseitenwandungen (23) bzw. (24) an, während die außen liegende hintere Stirnseite (313) gegen den planen Nutgrund (25) gepresst wird.

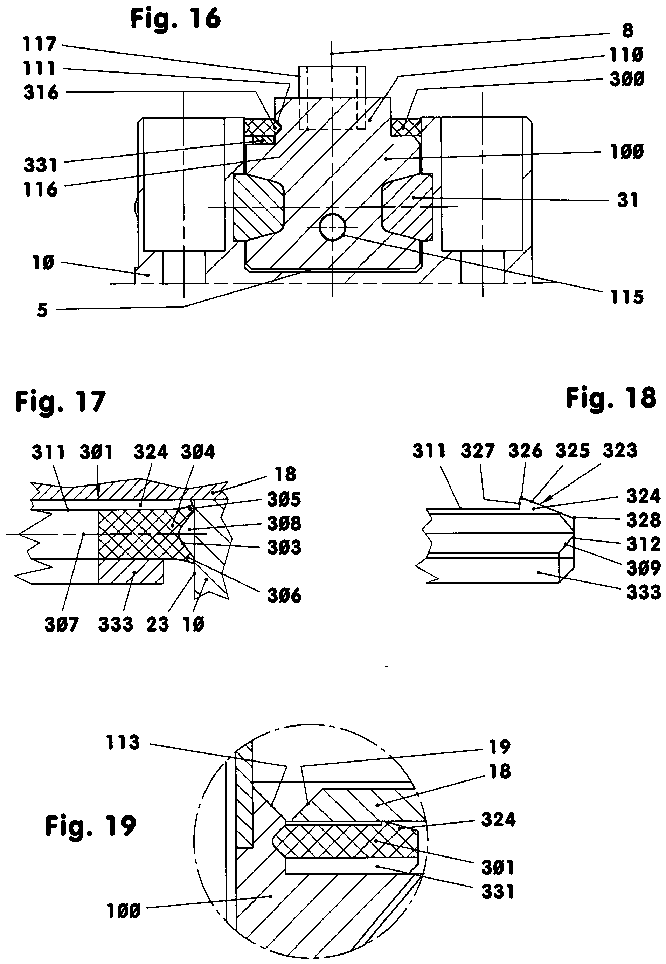

In diesen Bereichen hat der Elastomerkörper (301, 302) z.B. das in Figur 18 gezeigte, an der Führungsnutwandung (23- 25) anliegende doppellippige Profil (303). Das Profil (303) hat eine obere, äußere Lippe (305), die als erste Barriere gegen von außen eindringenden Schmutz in Form von Staub und/oder Feuchtigkeit dient. Durch die werkstoffeigene Spannkraft wird die Lippe (305) nach dem Einbau geringfügig nach oben gedrängt. Eine bezüglich Größe und geometrischen Abmessungen vergleichbare Lippe (306) ist zum Gehäuseinnenraum (5) hin geneigt. Sie hat u.a. die Aufgabe, das Schmiermittel des Doppelschiebekeilgetriebes (80) im Gehäuseinnenraum (5) zurückzuhalten. Die Lippe (306) ist zumindest nahezu symmetrisch zur oberen, äußeren Lippe (305), wobei die in Figur 17 eingezeichnete Achse (307) als Symmetrielinie dient.

Dabei schließen die beiden Dichtlippen (305, 306) einen kanalartigen, z.B. mindestens 0,25 mm tiefen Hohlraum (308) ein, der an der inneren bzw. vorderen Stirnseite (312) mit einer v-förmigen Öffnung (309) endet. Die innere Stirnseite (312) ist eben ausgeführt. Entlang der inneren Stirnseite (312) weist die Außenseite (311) des Dichtungskörpers (301, 302) eine dritte Dichtlippe (324) auf, die bei einem Verfahren der Schlitten (100, 101) an der Unterseite der Gehäuseabdeckung (18) entlanggleitet.

Die Dichtlippe (324), vgl. Figur 18, hat die Form eines Keils, ' dessen Spitze eine in Richtung der Grundkörpermittellinie (3) orientierte Vorderkante (328) aufweist. Der Keil hat dazu eine schräge Dichtflanke (325) und eine z.B. nahezu senkrecht auf die Außenseite (311) abfallende Sperrfläche (327). Zwischen der Sperrfläche (327) und der Dichtflanke (325) liegt eine z.B. 0,1 mm breite Kontaktfläche (326), die parallel zur Außenseite (311) bzw. zur Unterseite der Gehäuseabdeckung (18) orientiert ist. Die Dichtflanke (325) erstreckt sich z.B. 1,1 mm über die Außenseite (311) parallel zur Greifrichtung (9). Die Höhe der unbelasteten Sperrfläche (327) beträgt 0,2 mm.

Die Dichtflanke (325) hat im unbelasteten Zustand einen Neigungswinkel von z.B. 22 Winkelgraden. Die Vorderkante (328) liegt - u.a. zur Erleichterung der Montage - z.B. 0,2 mm unterhalb der regulären Außenseite (311) des Dichtungskörpers (301, 302).

Ggf. wird der Gehäuseinnenraum (5) zusätzlich mit Sperrluft belastet, so dass im Gehäuseinneren ein Überdruck von z.B. 0,2 - 0,5 ^{∗} 10⁵ Pa ansteht. In Figur 6 ist dazu eine hier mit einem Gewindestift verschlossene Druckluftanschlussbohrung (17) angeordnet, die direkt in der Führungsnut (21) endet. Die Sperrluft verhindert, dass trotz des Dichtungskörpers (301, 302) Schmutz in das Gehäuseinnere eindringen kann. Mit Hilfe der z.B. v-förmigen Öffnung (309), vgl. Figur 11, des von der Doppellippe (304) vorgegebenen Hohlraums (308) steht auch dieser Hohlraum (308) unter Sperrluft. Dadurch wird die Gefahr des eindringenden Schmutzes und/oder des austretenden Schmiermittels zusätzlich verringert.

Der Dichtungskörper (301, 302) ist als Kautschukwerkstoff im Ausführungsbeispiel am Dichtungsträger anvulkanisiert. Er kann aber auch als separates Bauteil hergestellt sein, das abschließend auf den Dichtungsträger aufgeklebt wird. Als alternative Verbindungmöglichkeit kann der Dichtungskörper (301, 302) auch am Dichtungsträger (331, 332) eingeknüpft sein. Dazu hat der Dichtungsträger entlang der Seitenwandungen mehrere Senkbohrungen. Die Senkbohrungen sind am langen Schenkel (333) parallel zu der Stanzrichtung orientiert, mit der die Positionierausnehmung (335) ausgestanzt wird. Die Senkungen der Senkbohrungen befinden sich auf der Seite des Schenkels (333), die dem Gehäuseinnenraum (5) zugewandt ist. Auch der kurze Schenkel (334) hat in diesem Fall derartige Senkbohrungen. Der Dichtungskörper (301, 302) weist an den Stellen, an denen der Dichtungsträger (331, 332) seine Senkbohrungen hat, entsprechende Pilze auf. Bei der Montage werden diese Pilze mit den Pilzköpfen voraus in die Senkbohrungen eingepresst. Die pilzkopfartigen Erweiterungen der Pilze verspannen sich in den Senkungen der Senkbohrungen, wodurch der Dichtungskörper (301, 302) fest am Dichtungsträger (331, 332) haftet.

Die Führungsnutdichtung (300) wird bei der Montage von außen her parallel zur Greifrichtung (9) so auf den einzelnen Schlitten (100, 101) aufgeschoben, dass der kurze Schenkel (334) an der äußeren Stirnseite des Schlittens (100, 101) unterhalb des Adapteraufsatzes (110) zur Anlage kommt. Bei diesem Aufschiebevorgang sind im Schlitten (100, 101) in den Senkungen (116) keine Passhülsen (117) eingesetzt.

Am Ende des Aufschiebevorganges rutscht die vordere Kante der Positionierausnehmung (315, 335) über die - zur Mittellinie (3) hin orientierte - Stirnfläche des Adapteraufsatzes (110) nach unten, bis der lange Schenkel (333), den Adapteraufsatz (110) umgebend, flach auf dem Schlitten (100, 101) aufliegt. Nun liegen auch die Seitenflächen der Positionierausnehmung (315) dicht an den vertikalen Wandungen des Schlittens (100, 101) an, vgl. Figur 2. Mittels der Schraube (118) wird die Führungsnutdichtung (300) an der äußeren Stirnseite des Schlittens (100, 101) fixiert.

Die Abdichtung zwischen dem Schlitten (100, 101) und der Führungsnutdichtung (300) kann verbessert werden, indem in den Adapteraufsatz (110) zumindest im Bereich der Anlage der Positionierausnehmung (315) eine Dichtkerbe (111), vgl. Figur 16, linke Seite, eingearbeitet wird. Um die Abdichtwirkung im Kerbenbereich zu vergrößern, kann der Dichtungskörper (301, 302) in den der Dichtkerbe (111) gegenüberliegenden Bereichen seiner Positionierausnehmung (315) einen vorspringenden Dichtsteg (316) aufweisen. Der Dichtsteg (316) greift dabei form- und kraftschlüssig in die Dichtkerbe (111) ein.

Figur 16 zeigt auf der rechten Seite eine Führungsnutdichtung (300) im Schnitt, bei der auf einen Dichtungsträger (331, 332) verzichtet wird. Stattdessen wird der abdichtende Elastomerkörper (300) direkt auf den Schlitten (100, 101) lösbar oder unlösbar aufgebracht.

Um zu verhindern, dass kleinere Schmutzpartikel bei der Schließbewegung der Greifer (1, 2) zwischen Schlitten (100, 101) und Gehäuseabdeckung (18) eingeklemmt werden können, weisen die Schlitten (100, 101) und die Gehäuseabdeckung (18) an den einander zugewandten Flächen Fasen (19) auf, vgl. Figur 19. Rechts ist die Geäuseabdeckung (18) z.B. mit einer 45°-Fase so abgeschrägt, dass von der dem Schlitten (100, 101) zugewandten Stirnfläche nur noch eine schmale Kante verbleibt, deren Höhe z.B. nur 0,1 bis 0,2 mm misst. Am Adapteraufsatz (110) des jeweiligen Schlittens (100, 101) ist ebenfalls eine 45°-Fase (113) angeordnet, deren der Gehäuseabdeckung (18) zugewandten Kante ungefähr auf der Höhe der Vorderkante der Fase (19) liegt.

Beim Löse- und/oder Greifhub bewegen sich die Dichtungskörper (301, 302) zusammen mit den Dichtungsträgern (331, 332) und den Schlitten (100, 101) innerhalb der Führungsnut (21) hin und/oder her. Hierbei verlässt der einzelne Dichtungskörper (301, 302) weder die Führungsnut (21) noch die Führungsschienen (31, 32). Auch bleibt die Einfachlippe (324) unter der Gehäuseabdeckung (18). Die im Bereich des langen Schenkels (333) angeordnete Doppellippe (304) bewegt sich parallel zur Greifhubrichtung, während der vom kurzen Schenkel (334) getragene Bereich der Doppellippe (304) quer zur Greifhubrichtung verschoben wird. Beim Greifhub wirkt die innere Dichtlippe (306) als ein das Schmiermittel vor sich herschiebender Abstreifer. Beim Lösehub übernimmt die äußere Dichtlippe (305) die Aufgabe des die Führungsschiene (31, 32) und die Führungssnut (21) reinigenden Abstreifers.

Alle Vorrichtungsteile, an denen sich der Dichtungskörper (301, 302) in einer Relativbewegung entlangbewegt, sind zur Förderung der Langlebigkeit der Dichtlippen (304, 324) feinbearbeitet.

Beim Löse- und/oder Greifhub bewegen sich die Dichtungskörper (301, 302) zusammen mit den Dichtungsträgern (331, 332) und den Schlitten (100, 101) innerhalb der Führungsnut (21) hin und/oder her. Beim Greifhub wirkt die innere Dichtlippe (306) als ein das Schmiermittel vor sich herschiebender Abstreifer. Beim Lösehub übernimmt die äußere Dichtlippe (305) die Aufgabe des die Führungsschiene (31, 32) und die Führungsnut (21) reinigenden Abstreifers.

Für die Schließ- bzw. Greifbewegung wird der Kolben (121), vgl. Figur 2, der sich zusammen mit dem Doppelschiebekeil (81) in seiner oberen Endlage befindet, z.B. mit Druckluft aus dieser Position heraus nach unten bewegt. Dazu wird seine Kolbenstangenseite (123) mit Druckluft beaufschlagt. Der sich nach unten bewegende Doppelschiebekeil (81) zieht die Schlitten (100, 101) in der Führungsnut (21) nach innen zur Mitte hin. Die Kombination aus Kolben (121), Kolbenstange (131, 132) und Doppelschiebekeil (81) wird zusätzlich in den Quernuten (36) der Führungsschienen (31, 32) geführt. Dazu liegen die Stützstege (85, 86) mit einem Spiel, das kleiner ist als 0,05 mm, an den Seitenflanken der Quernuten (36) an. Die Stirnflächen der Stützstege (85, 86) kontaktieren den jeweiligen Nutgrund der Quernuten (36) nicht.

Bei der Schließbewegung kommen die Keilflächen (108) am Doppelschiebekeil (81) zur Anlage. Sobald sich die Greifbacken (1, 2) am Werkstück (7) angelegt haben, stoppt die Bewegung bei einer Aufrechterhaltung der vollen Klemmkraft.

Zum Lösen des Werkstückes (7) wird die Kolbenbodenseite mit Druckluft beaufschlagt. Der sich nach oben bewegende Verbund aus dem Kolben (121) und dem Doppelschiebekeil (81) drückt die Schlitten (100, 101) bzw. die Greifbacken (1, 2) solange auseinander, bis die Kolbenstangenseite (123) am Grund der Zylinderausnehmung (55) zur Anlage kommt. Hier kontaktieren die Keilflächen (107) bei der Lösebewegung den Doppelschiebekeil (81).

Zur Erhöhung der Klemm und Lösekraft können z.B. im Zylinder mehrere Kolben hintereinander angeordnet werden. Auch ist es möglich, den Kolben in mindestens einer Hubrichtung mittels einer mechanischen Feder anzutreiben oder zusätzlich zu unterstützen.

### Bezugszeichenliste:

- 1, 2: Greifelemente, Greifbacken
- 3: Mittellinie zu (10, 34, 82)
- 4: Zylinderinnenraum
- 5: Gehäuseinnenraum, Gehäuseinneres
- 6: Maschinenschlitten, Maschinenteil, Handhabungsgeräteteil
- 7: Werkstück
- 8: vertikale Mittenlängsebene
- 9: Greifrichtung

- 10: Grundkörper, Gehäuse
- 11: Führungsabschnitt
- 12: Grundkörperoberseite
- 13: Grundkörperunterseite
- 14: Grundkörperstirnseite
- 15: Befestigungsbohrungen, vertikal
- 16: Quergangsbohrungen
- 17: Gewindebohrungen für Sperrluft
- 18: Gehäuseabdeckung, Abdeckplatte
- 19: Fase

- 21: Führungsnut
- 23, 24: Seitenwandungen, Führungsnutwandungen
- 25: Nutgrund, Führungsnutwandungen
- 26: Schienenführungsnut
- 27: Senkbohrung für Schrauben zu (31, 32)
- 28: Passstiftbohrungen
- 31, 32: Führungsschiene
- 33, 34,: Tragflanken
- 35: Fläche zwischen (33) und (34)
- 36: Quernut
- 38: Gewindebohrungen
- 39: Passstiftbohrungen

- 41: Senkschrauben
- 42: Passstifte

- 51: Antriebsabschnitt
- 55: Zylinderausnehmung, oval
- 56: Dichtsitzvertiefung für Flachdichtung
- 57: Bodenbohrungen
- 58: Druckluftbohrungen
- 59: Querbohrung

- 61: Durchgangsbohrung, mittig

- 65: Deckelausnehmung
- 66: Sensorausnehmungen
- 68: Zylinderschrauben für (71)

- 71: Deckel
- 73: Vertiefung
- 75, 76: Sacklochbohrungen, innen, in Flachdichtung
- 77: Querbohrungen
- 78: Befestigungsbohrungen
- 79: Flachdichtung

- 80: Doppelschiebekeilgetriebe
- 81: Doppelschiebekeil
- 83, 84: Stirnseiten, Stirnflächen, schräg
- 85, 86: Stützstege
- 87: Keilnut
- 91, 92: Keilsteg, T-förmig
- 95: Senkbohrung
- 96: Gewindebohrung

- 100, 101: Schlitten
- 102: Oberseite
- 103: Stirnseite, Stirnfläche
- 105: Schlittenführungsnuten
- 106: T-Nut
- 107: Keilflächen, Öffnungsanlage
- 108: Keilflächen, Schließanlage
- 109: Schmiertaschen

- 110: Adapteraufsatz
- 111: Dichtkerbe, ggf. umlaufend
- 113: Fase
- 115: Gewindebohrung für (300)
- 116: Senkung für (117)
- 117: Passhülsen
- 118: Schraube für (300)
- 120: Zylinder-Kolben-Einheit; Antrieb, pneumatisch
- 121: Kolben, oval
- 122: Kolbenbodenseite
- 123: Kolbenstangenseite
- 124: Vorsprung, scheibenförmig, Anschlag
- 125: Vorsprung, kolbenbodenseitig, zylindrisch
- 126: Sacklochbohrungen für (136)
- 127: Druckausgleichsbohrung
- 128: Senkung

- 131: Kolbenstangenhülse, Kolbenstange
- 132: Kolbenstangenschraube, Kolbenstange
- 135: Durchgangsbohrung
- 136: Scheibenmagnete

- 300: Führungsnutdichtung, Elastomerkörper

- 301, 302: Dichtungskörper, Elastomerkörper

- 303: Profil, seitlich
- 304: Doppellippe
- 305: Lippe, außen, Dichtlippe
- 306: Lippe, innen, Dichtlippe
- 307: Symmetrieachse, Mittellinie
- 308: Hohlraum, kanalartig
- 309: Öffnung
- 311: Außenseite
- 312: Stirnseite, vorn, oben, innen
- 313: Stirnseite, hinten, unten
- 315: Positionierausnehmung
- 316: Innendichtung, Dichtsteg für (111)
- 317: Nuten
- 318: Bohrung

- 323: Profil, oben
- 324: Dichtungslippe, Einfachlippe, Dichtlippe
- 325: Dichtflanke
- 326: Kontaktfläche
- 327: Sperrfläche
- 328: Vorderkante

- 331, 332: Dichtungsträger, Blechwinkel
- 333: Schenkel, lang
- 334: Schenkel, kurz
- 335: Positionierausnehmung
- 336: Montagebohrung
- 337: Nuten

## Patentansprüche

1. Parallelgreifvorrichtung mit bewegliche Greifelemente (1, 2) tragenden Schlitten (100, 101), wobei die Schlitten (100, 101) in Greifrichtung (9) der Greifelemente (1, 2) hintereinander in einer gemeinsam genutzten, in einem Grundkörper (10) angeordneten, zu den Greifelementen (1, 2) hin zumindest bereichsweise offenen Führungsnut (21) parallel zur Greifrichtung (9) - zwischen einer Öffnungs- und Schließstellung - antreibbar geführt und quer zur Greifrichtung (9) allseitig abstützend gelagert sind,
- wobei die Führungsnut (21) im mittleren Bereich eine Gehäuseabdeckung (18) aufweist, deren in Greifrichtung (9) gemessene Länge mindestens dem maximalen Greifhub der Greifelemente (1, 2) entspricht,
- wobei jeder Schlitten (100, 101) einen Dichtungskörper (301, 302) direkt oder indirekt über einen Dichtungsträger (331, 332) lagert, der an den seitlichen Führungsnutwandungen (23, 24) und dem Grund (25) der Führungsnut (21) dichtend und zumindest bereichsweise Schmutz abstreifend anliegt und
- wobei jeder Dichtungskörper (301, 302) im Bereich der Gehäuseabdeckung (18) eine an dieser anliegende Dichtlippe (324) aufweist.

2. Parallelgreifvorrichtung gemäß Anspruch 1, **dadurch gekennzeichnet, dass** jeder Dichtungskörper (301, 302) einteilig ausgebildet ist.

3. Parallelgreifvorrichtung gemäß Anspruch 1, **dadurch gekennzeichnet, dass** jeder Dichtungskörper (301, 302) mindestens eine Positionierausnehmung (315, 335) zur bereichsweisen Umfassung der Schlitten (100, 101) oder Greifelemente (1, 2) aufweist.

4. Parallelgreifvorrichtung gemäß Anspruch 1, **dadurch gekennzeichnet, dass** jeder Dichtungskörper (301, 302) in den Bereichen, die die seitlichen Führungsnutwandungen (23, 24) und den Grund (25) der Führungsnut (21) kontaktieren, doppellippig, einen kanalartigen Hohlraum (308) umschließend, ausgebildet ist.

5. Parallelgreifvorrichtung gemäß Anspruch 1, **dadurch gekennzeichnet, dass** die Dichtlippe (324) eine Einfachdichtlippe ist.

6. Parallelgreifvorrichtung gemäß Anspruch 5, **dadurch gekennzeichnet, dass** jeder Dichtungskörper (301, 302) im gesamten Greifhubbereich mit einer Doppellippe (304) an den Führungsnutwandungen (23 - 25) und mit der Einfachlippe (324) an der Gehäuseabdeckung (18) anliegt.

7. Parallelgreifvorrichtung gemäß Anspruch 1, **dadurch gekennzeichnet, dass** der einzelne Dichtungskörper (301, 302) an dem ihn tragenden Schlitten oder separat montierbaren Dichtungsträger (331, 332) anvulkanisiert, angeklebt, aufgespritzt oder mit mechanischen Hilfsmitteln befestigt ist.

8. Parallelgreifvorrichtung gemäß Anspruch 1, **dadurch gekennzeichnet, dass** jeder Dichtungskörper (301, 302) - mit oder ohne Dichtungsträger (331, 332) - symmetrisch zur Mittenlängsebene (8) des Grundkörpers (10) ausgebildet ist.

## Claims

1. A parallel gripping device having slides (100, 101) bearing movable gripping elements (1, 2), wherein the slides (100, 101) are guided in a row, as seen in the gripping direction (9) of the gripping elements (1, 2), in a guide groove (21) parallel to the gripping direction (9) - between an opening position and a closing position - which guide groove (21) they use jointly and which is arranged in a main body (10) and is at least partially open to the gripping elements (1, 2), in such a manner that the slides (100, 101) can be driven and are supported on all sides transversely to the gripping direction (9),
- wherein the guide groove (21) has a housing cover (18) in the centre portion, the length of which housing cover (18) corresponds at least to the maximum gripping stroke of the gripping elements (1, 2) as measured in the gripping direction (9),
- wherein each slide (100, 101) directly or indirectly supports a sealing body (301, 302) via a seal carrier (331, 332) which tightly fits against the lateral guide groove walls (23, 24) and the bottom (25) of the guide groove (21) in such a manner that it seals and at least in part wipes away contaminations, and
- wherein each sealing body (301, 302) has a sealing lip (324) in the area of the housing cover (18), which sealing lip (324) fits tightly against said cover.

2. The parallel gripping device according to Claim 1, **characterized in that** each sealing body (301, 302) is formed in one piece.

3. The parallel gripping device according to Claim 1, **characterized in that** each sealing body (301, 302) has at least one positioning recess (315, 335) for partially surrounding the slides (100, 101) or the gripping elements (1, 2).

4. The parallel gripping device according to Claim 1, **characterized in that** each sealing body (301, 302) in the portions that contact the lateral guide groove walls (23, 24) and the bottom (25) of the guide groove (21) is formed double-lipped and enclosing a channel-like cavity (308).

5. The parallel gripping device according to Claim 1, **characterized in that** the sealing lip (324) is a single sealing lip.

6. The parallel gripping device according to Claim 5, **characterized in that** each sealing body (301, 302) in the entire gripping stroke area fits tightly against the guide groove walls (23-25) with a double lip (304) and against the housing cover (18) with the single lip (324) .

7. The parallel gripping device according to Claim 1, **characterized in that** the individual sealing body (301, 302) is vulcanized, glued, moulded or fastened with mechanical aids onto the slide bearing it or onto a separately mountable seal carrier (331, 332).

8. The parallel gripping device according to Claim 1, **characterized in that** each sealing body (301, 302) - with or without a seal carrier (331, 332) - is formed symmetrically to the centre longitudinal plane (8) of the main body (10).

## Revendications

1. Dispositif de préhension parallèle comprenant des glissoirs (100, 101) portant des éléments de préhension (1, 2) mobiles, les glissoirs (100, 101) étant guidés en entraînement les uns derrière les autres dans la direction de préhension (9) des éléments de préhension (1, 2) dans une rainure de guidage (21) conjointe, disposée dans un corps de base (10), ouverte au moins par endroits vers les éléments de préhension (1, 2), à la parallèle de la direction de préhension, entre une position d'ouverture et une position de fermeture, et étant logés en assurant un appui de tous les côtés, à la transversale de la direction de préhension (9),
- la rainure de guidage (21) comportant dans la zone médiane un couvercle de boîtier (18) dont la longueur mesurée dans la direction de préhension (9) correspond au moins à la course de préhension maximale des éléments de préhension (1, 2),
- chaque glissoir (100, 101) logeant un organe d'étanchéité (301, 302) directement ou indirectement par l'intermédiaire d'un support de joint (331, 332), qui en assurant l'étanchéité est adjacent aux parois latérales de la rainure de guidage (23, 24) et au fond inférieur (25) de la rainure de guidage (21) et en enlevant les impuretés au moins par endroits, et
- chaque organe d'étanchéité (301, 302) comportant dans la zone du couvercle de boîtier (18) une lèvre d'étanchéité (324) adjacente à celui-ci.

2. Dispositif de préhension parallèle selon la revendication 1, **caractérisé en ce que** chaque organe d'étanchéité (301, 302) est conçu en monobloc.

3. Dispositif de préhension parallèle selon la revendication 1, **caractérisé en ce que** chaque organe d'étanchéité (301, 302) comporte au moins un évidement de positionnement (315, 335), destiné à entourer par endroits le glissoir (100, 101) ou des éléments de préhension (1, 2).

4. Dispositif de préhension parallèle selon la revendication 1, **caractérisé en ce que** dans les régions qui entrent en contact avec les parois latérales de la rainure de guidage (23, 24) et le fond inférieur (25) de la rainure de guidage (21), chaque organe d'étanchéité (301, 302) est conçu avec une double lèvre, entourant une cavité (308) canalaire.

5. Dispositif de préhension parallèle selon la revendication 1, **caractérisé en ce que** la lèvre d'étanchéité (324) est une lèvre d'étanchéité simple.

6. Dispositif de préhension parallèle selon la revendication 5, **caractérisé en ce que** dans l'ensemble de la zone de course de préhension, chaque organe d'étanchéité (301, 302) est adjacent par une double lèvre (304) aux parois de la lèvre de guidage (23 à 25) et par la lèvre simple (324) au couvercle de boîtier (18) .

7. Dispositif de préhension parallèle selon la revendication 1, **caractérisé en ce que** l'organe d'étanchéité (301, 302) individuel est vulcanisé, collé, injecté ou fixé par des moyens auxiliaires mécaniques sur le glissoir ou support de joint (331, 332) montable séparément qui le porte.

8. Dispositif de préhension parallèle selon la revendication 1, **caractérisé en ce que** chaque organe d'étanchéité (301, 302) est conçu - avec ou sans support de joint (331, 332) - en symétrie du plan médian longitudinal (8) du corps de base (10).
